# EUROPEAN PATENT APPLICATION

(11) **EP 4 474 877 A1**
(43) Date of publication of application: **11.12.2024**
(21) Application number: 24178063.4
(22) Date of filing: 24.05.2024
(51) Int. Cl.: G02B 6/44

(54) **CABLE SECURING SYSTEMS AND METHODS**

(30) Priority: 30.05.2023 US 202363469603 P
(71) Applicant: Corning Research & Development Corporation, Corning, New York 14831 (US)
(72) Inventor: KLAK, Robert Tomasz, 98220 Zdunska Wola (PL); KRECZMER, Wojciech, 91-849 Lodz (PL); McKINNEY, Larry Todd, Keller, 76248 (US); ZAPPEK, Andreas, 46539 Dinslaken (DE)
(74) Representative: Reddie & Grose LLP

(57) **Abstract**

Systems and methods for securing a cable within an enclosure are provided herein. A system includes a base having a bottom surface and two walls extending up from the bottom surface to define an interior volume. The base has a first end positioned closer to a cable entrance into the enclosure than a second end, and the walls are angled such that a width of the interior volume of the base decreases from the first end to the second end. The system also includes one or more clamp elements disposable within the base and configured to transition between unclamped and clamped positions. The clamped position is closer to the second end than the unclamped position. When the first clamp element is in the clamped position, the cable is secured within the interior volume of the base.

## Description

### PRIORITY APPLICATION

This application claims the benefit of priority of U.S. Provisional Application No. 63/469,603, filed on May 30, 2023, the content of which is relied upon and incorporated herein by reference in its entirety.

### FIELD OF THE DISCLOSURE

Embodiments of the present disclosure relate generally to network communications equipment and, more particularly, to cable securing systems and methods for cable or fiber management, such as within communications equipment cabinets and other enclosures.

### BACKGROUND OF THE DISCLOSURE

Cables (such as used to carry communication fiber) are often routed in and out of communications equipment cabinets and other enclosures in order to connect with various communications equipment. The cables are often secured at the entry point(s) into the enclosures to maintain a certain arrangement, and in some cases, to provide added stability. Current securing mechanisms include cable glands, cable ties, or other structures that require additional tools for installation. Cable glands are expensive and require a high level of skill from installers. Alternatively, although cable ties are less expensive than cable glands, cable ties cause problems over time. Both cable glands and cable ties require the installer to measure the outer diameter of the cable being installed and then to use a properly sized cable gland or cable tie wrap, accordingly, which requires additional time and is sometimes difficult when space is limited.

Improvements in the foregoing are desired.

### BRIEF SUMMARY OF THE DISCLOSURE

In an optical network, fiber optic feeder or distribution cables are routed and connected to enclosures (*e.g.,* network access point enclosures, optical network terminals, network interface devices, etc.). At these connection or distribution points, assemblies are often provided to secure the cables being routed. During maintenance and/or initial setup, installation personnel (*e.g.,* installers) may feed a length of fiber optic cable into the enclosure and then secure the fiber optic cable to remain in a desired position. Typically, the mechanism used to secure the fiber optic cable in this way is dimension specific. Additionally, special tools are often necessary for applying such securing mechanisms to the fiber optic cable during installation. Thus, many different securing mechanisms and/or elements may be necessary to secure multiple different cables being routed into an enclosure. The complexity of this securing task may be too costly and arduous, and thus proper procedures may be disregarded, resulting in faulty installation (which may cause damage and/or signal loss within the optical network).

Embodiments of the present disclosure provide for various systems that cure many of the above noted defects and difficulties. In this regard, various embodiments of the present disclosure provide a simple, effective way to ensure that cables are properly secured within or partially within an enclosure to improve the reliability of connections and/or terminals within a network. In some embodiments, the systems are capable of securing cables within a range of cable diameters using the same components. In some embodiments, a system may include a base with one or multiple clamp elements and may be customized to secure a range of cable diameters-thereby offering versatility in cable sizes that can be secured with no need for additional tools. Multiple systems may be utilized in one enclosure or application.

In an example embodiment, a system is provided for securing a cable within an enclosure. The system includes a base, the base having a bottom surface and at least one wall extending up from the bottom surface to define an interior volume. The base has a first end and a second end, the first end being positioned more proximate to a cable entrance into the enclosure than the second end, and the at least one wall is angled from the first end to the second end such that a cross-sectional width of the interior volume of the base decreases from the first end to the second end. The system also includes a first clamp element disposable within the interior volume of the base, the first clamp element being configured to transition within the interior volume between an unclamped position proximate the first end and a clamped position. In the clamped position, the first clamp element is closer to the second end than the unclamped position and, when the first clamp element is in the clamped position, the cable is secured within the interior volume of the base.

In some embodiments, the system may further include a second clamp element disposable within the interior volume of the base, the second clamp element being configured to transition within the interior volume between a second unclamped position proximate the first end and a second clamped position. In the second clamped position, the second clamp element may be closer to the second end than the second unclamped position.

In some embodiments, when the first clamp element is in the clamped position and the second clamp element is in the second clamped position, the cable may be secured within the interior volume of the base.

In some embodiments, the first clamp element may include a first elongated arm that extends outwardly from the base when the first clamp element is disposed within the interior volume of the base. The second clamp element may include a second elongated arm that extends outwardly from the base when the second clamp element is disposed within the interior volume of the base. The first clamp element may be repositionable within the base from the unclamped position to the clamped position, and the second clamp element may be repositionable within the base from the second unclamped position to the second clamped position, when the first elongated arm of the first clamp element and the second elongated arm of the second clamp element are pulled in a direction that is away from the enclosure.

In some embodiments, the first clamp element may include a pin that is movable within a guide slot of the base between the unclamped position and the clamped position.

In some embodiments, the pin may include a blocking mechanism that maintains the first clamp element within the interior volume of the base.

In some embodiments, the base may have a first plurality of teeth disposed along an inside surface of the at least one wall.

In some embodiments, the first clamp element may have a second plurality of teeth disposed along a surface of an interior side of the first clamp element, and the first plurality of teeth may be configured to interact with the second plurality of teeth such that the first clamp element locks with respect to the base when the first clamp element is in the clamped position.

In some embodiments, the first clamp element may be repositionable from the clamped position to the unclamped position by pinching the first clamp element in an inward direction and then pushing the first clamp element in a direction that is toward the enclosure.

In some embodiments, the first clamp element may be repositionable from the clamped position to the unclamped position by pinching the first clamp element at a location along a length of the first clamp element that is adjacent to the base.

In some embodiments, the cross-sectional width of the base may decrease from the first end to the second end at a ratio that corresponds to a diameter of the cable.

In some embodiments, the ratio may be 2 to 1.

In some embodiments, a length of the base may be selected such that the cable with a desired diameter is securable within the base at a desired tension.

In some embodiments, the first clamp element may include at least one protrusion disposed on an inner surface of the first clamp element, and the at least one protrusion may be configured to interact with the cable when the cable is secured within the interior volume of the base to prevent the cable from moving.

In some embodiments, the first clamp element may be comprised of a first material, the base may be comprised of a second material, and the first material may be more rigid than the second material.

In another example embodiment, an enclosure is provided. The enclosure includes a cable entrance into the enclosure and a base, the base having a bottom surface and at least one wall extending up from the bottom surface to define an interior volume. The base has a first end and a second end, the first end being positioned more proximate to the cable entrance into the enclosure than the second end, and the at least one wall is angled from the first end to the second end such that a cross-sectional width of the interior volume of the base decreases from the first end to the second end. The enclosure also includes a first clamp element disposable within the interior volume of the base, the first clamp element being configured to transition within the interior volume between an unclamped position proximate the first end and a clamped position. The clamped position is closer to the second end than the unclamped position and, when the first clamp element is in the clamped position, a cable is securable within the interior volume of the base.

In some embodiments, the enclosure may further include a second clamp element disposable within the interior volume, the second clamp element being configured to transition within the interior volume between a second unclamped position proximate the first end and a second clamped position. The second clamped position may be closer to the second end than the second unclamped position.

In some embodiments, when the first clamp element is in the clamped position and the second clamp element is in the second clamped position, the cable may be secured within the interior volume of the base.

In some embodiments, the first clamp element may include a first elongated arm that extends outwardly from the base when the first clamp element is disposed within the interior volume of the base, and the second clamp element may include a second elongated arm that extends outwardly from the base when the second clamp element is disposed within the interior volume of the base. The first clamp element may be repositionable within the base from the unclamped position to the clamped position, and the second clamp element may be repositionable within the base from the second unclamped position to the second clamped position, when the first elongated arm of the first clamp element and the second elongated arm of the second clamp element are pulled in a direction that is away from the enclosure.

In another example embodiment, a method is provided for securing a cable within an enclosure. The method includes providing a base, the base having a bottom surface and at least one wall extending up from the bottom surface to define an interior volume. The base has a first end and a second end, the first end being positioned more proximate to a cable entrance into the enclosure than the second end, and the at least one wall is angled from the first end to the second end such that a cross-sectional width of the interior volume of the base decreases from the first end to the second end. The method also includes placing a first clamp element within the interior volume of the base such that the first clamp element can transition within the interior volume between an unclamped position proximate the first end and a clamped position. The clamped position is closer to the second end than the unclamped position. The method further includes securing the cable within the enclosure by moving the first clamp element into the clamped position.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 illustrates an example enclosure including six example bases configured to secure one or more cables, in accordance with some embodiments discussed herein;
FIG. 2 shows a perspective view of an example base positioned proximate a portion of an enclosure, in accordance with some embodiments discussed herein;
FIG. 3 shows a top view of the base of FIG. 2, in accordance with some embodiments discussed herein;
FIG. 4 shows a perspective view of an example first clamp element and an example second clamp element, in accordance with some embodiments discussed herein;
FIG. 5 shows a zoomed-in side perspective view of a portion of the first clamp element of FIG. 4, in accordance with some embodiments discussed herein;
FIG. 6 shows a zoomed-in perspective cross-sectional view of the first clamp element of FIG. 5, in accordance with some embodiments discussed herein;
FIG. 7 shows a perspective view of an inside surface of the first clamp element of FIG. 4, in accordance with some embodiments discussed herein;
FIG. 8 shows an exploded view of the base of FIGs. 2-3, the first clamp element of FIGs. 4-7, the second clamp element of FIG. 4, and an example cable, in accordance with some embodiments discussed herein;
FIG. 9 shows a bottom perspective view of the base, the first clamp element, the second clamp element, and the cable of FIG. 8, the first clamp element and the second clamp element being disposed within the base in a clamped position with the cable secured therebetween, in accordance with some embodiments discussed herein;
FIG. 10A shows a top view of the base, the first clamp element, the second clamp element, and the cable of FIGs. 8-9, the first clamp element and the second clamp element being disposed within the base in an unclamped position with the cable disposed therebetween, in accordance with some embodiments discussed herein;
FIG. 10B shows a top view of the base, the first clamp element, the second clamp element, and the cable of FIGs. 8-10A, the first clamp element and the second clamp element being disposed within the base in a clamped position with the cable secured therebetween, in accordance with some embodiments discussed herein;
FIG. 11 shows a zoomed-in perspective view of the base, the first clamp element, the second clamp element, and the cable of FIGs. 8-10B, the first clamp element and the second clamp element being disposed within the base in a clamped position with the cable secured therebetween, in accordance with some embodiments discussed herein; and
FIG. 12 illustrates a flowchart for an example method of securing a cable within an enclosure, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Systems and methods according to the present disclosure allow an installer to configure cables and/or other communications equipment in an improved manner, such as by enabling the installer to organize and secure cables within a base on or within an enclosure using one or more clamp elements. In this regard, in some embodiments, example systems may be able to secure cables that are within a range of cable diameters without requiring the installer to use additional tools. Further, in some embodiments, example systems may additionally prevent axial torsion (*e.g.,* pulling forces) from damaging the cables and/or the communications equipment at the point of connection.

The presently described assemblies and systems may provide improved compliance by offering a simple method of securing cables within communications equipment cabinets or other enclosures. This can prevent or limit signal loss as well as protect the integrity of the entire network.

Further, the presently described assemblies and systems incorporate simple management and organization of the cables into its design. The alignment of cables within one or more bases that lead into an enclosure avoids cluttering the enclosure and/or tangling of the cables. In addition, the presently described assemblies may facilitate ease of access. Authorized personnel may also make changes to the communications equipment setup relatively easily. Similarly, cables may be secured, adjusted, and replaced easily.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (*e.g.,* network access point (NAP) enclosures, optical network terminals (ONTs), network interface devices (NIDs)). Connection terminals may include ports and be used to establish optical connections between optical fibers terminated from the distribution cable and respective optical fibers of drop cables, extended distribution cables, tether cables, and/or branch cables.

The connection terminals may be used to extend fiber optic communications services to a subscriber. In this regard, fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber. Installation may include making each of the many separated cables connect between a main distribution point (*e.g.,* in the basement or elsewhere in the building) and the end user. Each connection may require a different length and/or diameter of cable, so variations in cable tensions and routing may introduce further tangling or complexities into what may be an already crowded enclosure. Moreover, modifications after initial installation may be required (*e.g.,* due to building or subscriber changes), requiring the installer to re-enter the enclosure and quickly make adjustments to cables or fibers within, which may cause axial strain on cables during cable management activities.

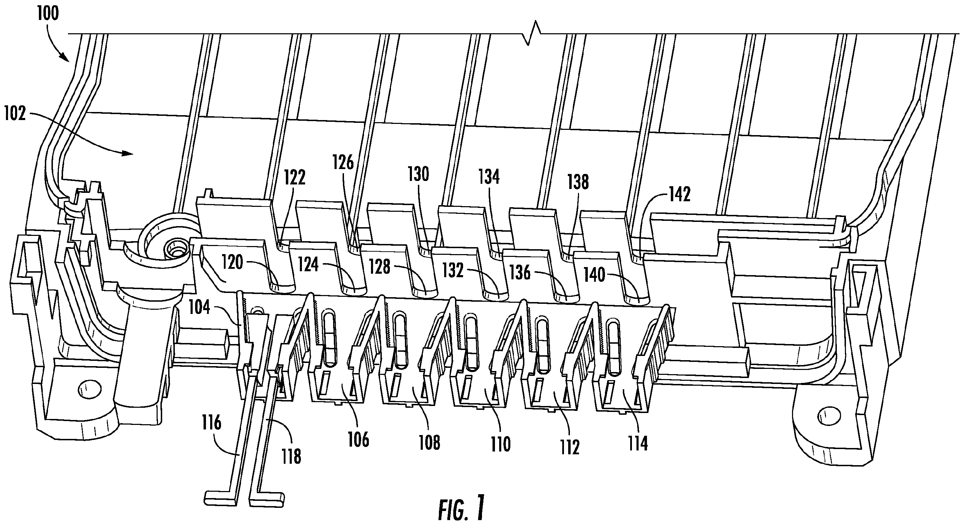

FIG. 1 illustrates an example enclosure 100 usable in a fiber optic (or other communication) network. The enclosure includes an interior volume 102. The enclosure 100 also includes six bases 104, 106, 108, 110, 112, 114 for routing cables extending out from the interior volume 102. A first base 104 extends from a first outer cable through portion 120 and a first inner cable through portion 122, which are cable entrances into the enclosure 100 (as used herein, the term "cable entrance" is not meant to be limited to a specific direction of entry into or exit from the enclosure - e.g., a cable entrance may be used to refer to an opening where the cable enters or exits the enclosure). The first base 104 is shown in FIG. 1 with a first clamp element 116 and a second clamp element 118 disposed therewithin in an unclamped position. As will be described in more detail herein, the first clamp element 116 and the 118 are movable within an interior volume of the base 104 between the unclamped position and a clamped position to secure a cable therebetween. Similar to the first base 104, a second base 106 extends from a second outer cable through portion 124 and a second inner cable through portion 126; a third base 108 extends from a third outer cable through portion 128 and a third inner cable through portion 130; a fourth base 110 extends from a fourth outer cable through portion 132 and a fourth inner cable through portion 134; a fifth base 112 extends from a fifth outer cable through portion 136 and a fifth inner cable through portion 138; and a sixth base 114 extends from a sixth outer cable through portion 140 and a sixth inner cable through portion 142. Although the embodiment shown in FIG. 1 includes six bases extending from the interior volume 102 of the enclosure 100, in some other embodiments, an enclosure 100 may have more than six or less than six bases. Further, in some embodiments, the one or more bases may be configured differently with respect to the enclosure 100. For example, the bases may be located within or partially within the interior volume 102 of the enclosure 100 and/or the outer and inner cable through portions may be configured differently (or eliminated altogether). Notably, in some embodiments, a foam or other dust mitigation mechanism may be positioned between the inner cable through portions and the outer cable through portions.

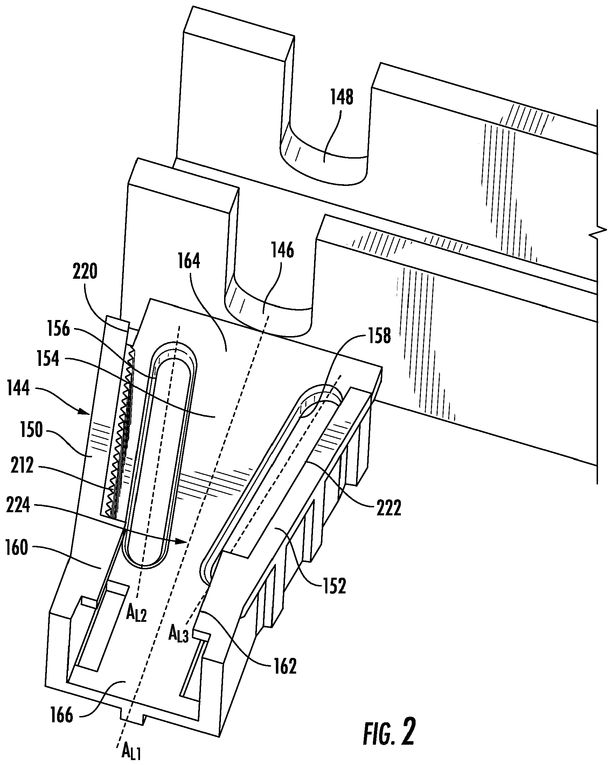

FIG. 2 shows a base 144 having a first end 164 and a second end 166. The first end 164 of the base 144 is connected to an outer cable through portion 146 and an inner cable through portion 148 for an enclosure 100 or similar structure. The base 144 may also be configured such that in the clamped position, a first clamp element 168 and/or a second clamp element 184 are closer to the second end 166 than in the unclamped position.

The base 144 further includes a first wall 150 and a second wall 152 extending up from a bottom surface 154. While the embodiment shown has a first wall 150 and a second wall 152, in other embodiments, the base 144 may have only one wall or more than two walls. The first wall has a first flange 160, and the second wall 152 has a second flange 162. Further, the first wall 150 and the second wall 152 are angled relative to a longitudinal axis A_{L1} of base 144. Stated another way, the first wall 150 and the second wall 152 are angled (relative to longitudinal axis A_{L1} of the base 144) such that an interior volume 224 of the base 144 defined by the first wall 150, the second wall 152, and the bottom surface 154 has a cross-sectional width that decreases from the first end 164 to the second end 166 of the base 144.

The bottom surface 154 includes a first guide slot 156 and a second guide slot 158 configured to interact with, e.g., a first clamp element 168 and a second clamp element 184. In some embodiments, the first guide slot 156 may have a first longitudinal axis A_{L2} that is parallel to a length of the first wall 150, and the second guide slot 158 may have a second longitudinal axis A_{L3} that is parallel to a length of the second wall 152. The first longitudinal axis A_{L2} and the second longitudinal axis A_{L3} may, for example, form angles with the longitudinal axis A_{L1} of the base 144 that are approximately 15 degrees. In other embodiments, however, the first guide slot 156 and the second guide slot 158 may have alternate configurations within bottom surface of 154 of base 144 relative to walls 150, 152, or the base 144 may not include guide slots.

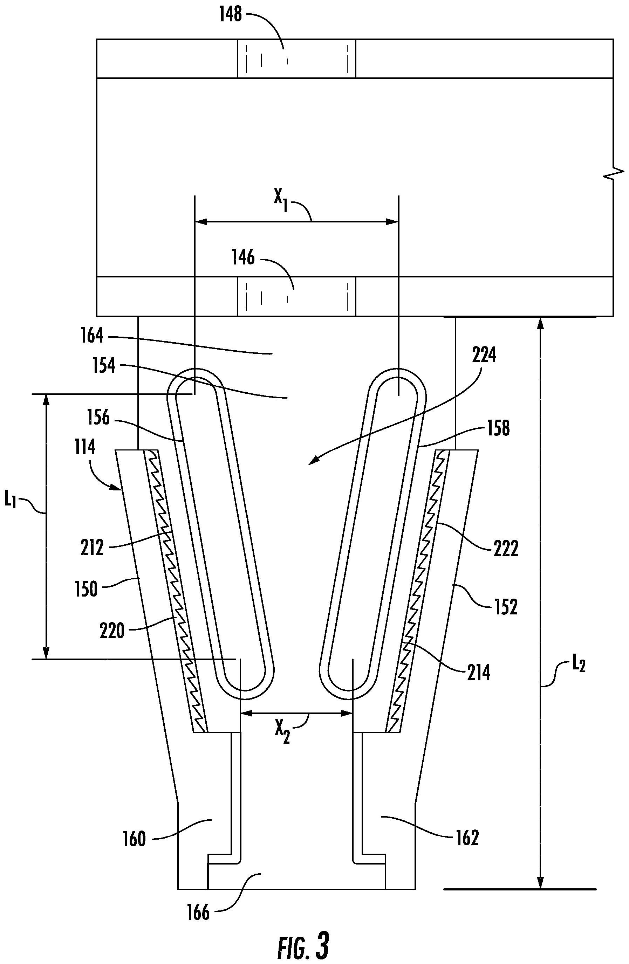

FIG. 3 is a top view of the base 144 showing a first cross-sectional width X₁ of the interior volume 224 at the first end 164 of the base 144, a second cross-sectional width X₂ of the interior volume 224 at the second end 166, a length L₁ of an internal portion of the base 144 that contains the first guide slot 156 and the second guide slot 158, and a length L₂ of the entire base 144. In some embodiments, the first cross-sectional width Xi, the second cross-sectional width X₂, and the length L₁ may be configured such that base 144 can accommodate and secure a range of cable diameters within the interior volume 224 of the base 144 at the desired tension. For example, the cross-sectional width of the base 144 may decrease from the first cross-sectional width X₁ at the first end 164 to the second cross-sectional width X₂ at the second end 166 at a ratio that corresponds to a desired cable diameter (e.g., a median cable diameter of a desired cable diameter range). For example, in some embodiments, the ratio of cross-sectional widths X₂ to X₁ may be 2 to 1. Further, the length L₁ may correspond to the ratio such that a cable with the desired cable diameter is securable within the base 144 at the desired tension. For example, an embodiment with a cross-sectional width ratio of 4 to 1 may require a longer length L₁ than would an embodiment with a cross-sectional width ratio of 2 to 1. That is, the length L₁ may be configured such that a cable is not subject to a force that can damage the cable. That is, if the length L₁ were too short for the example cross-sectional width ratio of 2 to 1, the force applied to the cable could be too concentrated and may cause damage. However, by the length L₁ being an appropriate value, the force applied to the cable would be spread out across an area on a surface of the cable, thus preventing damage. This is in contrast to currently used securing mechanisms such as cable tie wraps that provide no control over the force applied to the cable and thus allow damage to occur.

For example, the first cross-sectional width Xi, the second cross-sectional width X₂, and the length L₁ may be configured such that a range of cable diameters between 2 and 8 millimeters are securable within the interior volume 224 of the base 144 at a desired tension. The first cross-sectional width X₁ may be 16 millimeters, and the second cross-sectional width X₂ may be 8 millimeters (or slightly greater than 8 millimeters), such that the ratio is 2 to 1. The first clamp element 168 and the second clamp element 184 may then be sized accordingly (e.g., widths sized accordingly) to ensure that cables with diameters of 2 millimeters and 8 millimeters are both securable within the system. Further, in some embodiments, the length L₁ may be at least 2 millimeters, which is the diameter of the smallest cable in the range of desired cable diameters. Alternatively, the length L₁ may be 14 millimeters, 16 millimeters, 24 millimeters, or any other value. In this regard, in some embodiments, higher values of the length L₁ may create a less-concentrated force on the cable when secured, which is often desirable.

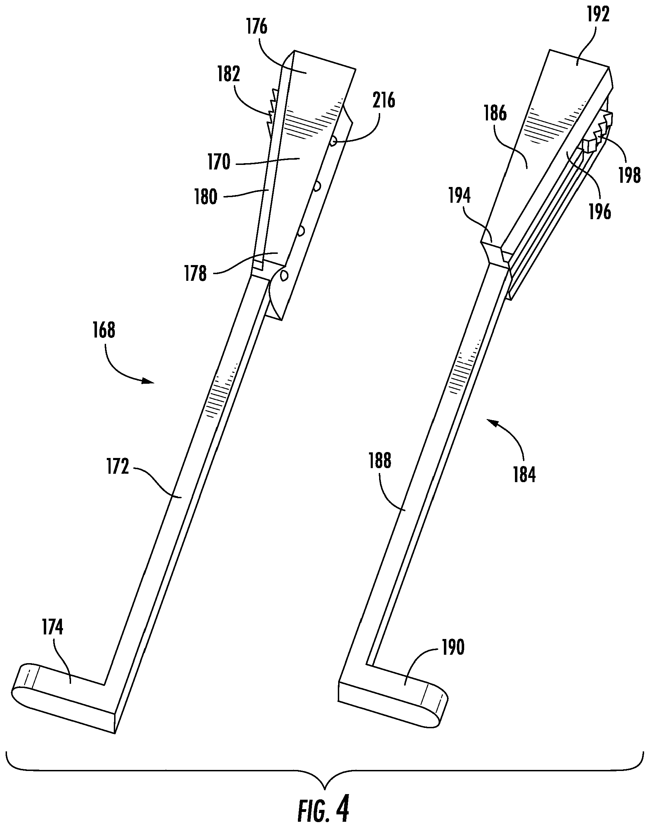

As shown in FIGs. 2-3, the base 144 may have a first plurality of teeth 212 disposed along an inside surface 220 of the first wall 150 and a second plurality of teeth 214 disposed along an inside surface 222 of the second wall 152 such that the base 144 can interact with a first clamp element 168 and a second clamp element 184, which may also contain pluralities of teeth (see FIG. 4). Although the first plurality of teeth 212 are disposed along a majority or all of the first wall 150 and the second plurality of teeth 214 are disposed along a majority or all of the second wall 152, in other embodiments, the first plurality of teeth 212 may be disposed along only a portion of the first wall 150 and/or the second plurality of teeth 214 may be disposed along only a portion of the second wall 152. The first plurality of teeth 212 may be configured to interact with a third plurality of teeth 182 on a first clamp element 168 and the second plurality of teeth 214 may be configured to interact with a fourth plurality of teeth 198 on a second clamp element 184, as will be described in more detail herein.

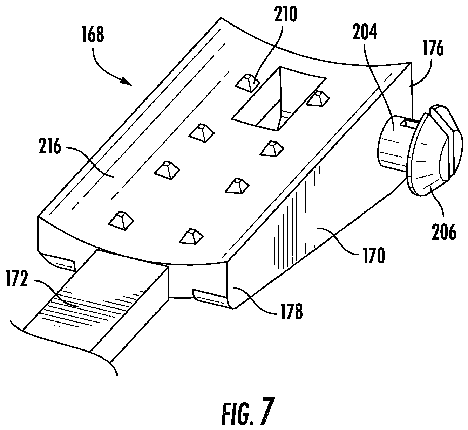

FIG. 4 shows the first clamp element 168 and the second clamp element 184 configured to be disposable within the base 144 of FIGs. 2-3 as discussed in greater detail herein. As shown, the first clamp element 168 includes a first connection portion 170, a first elongated arm 172, and a first gripping portion 174. The first connection portion 170 includes a first end 176 and a second end 178, as well as an outside surface 180 and an inside surface 216 (also shown in FIG. 7). The first connection portion 170 is configured to be fed through the first guide slot 156 of the base 144 and toggle the first clamp element 168 between the clamped and unclamped positions, as described herein. Further, the first connection portion 170 includes the third plurality of teeth 182 on the outside surface 180 for interaction with the first plurality of teeth 212 on the base 144, and a plurality of protrusions 210 on the inside surface 216 for interaction with a cable 208. The first elongated arm 172 and the first gripping portion 174 may make it easier for a user to grab the first clamp element 168 and/or move the first clamp element 168 within the base 144, as will be described in more detail herein.

Similarly, the second clamp element 184 includes a second connection portion 186, a second elongated arm 188, and a second gripping portion 190. The second connection portion 186 includes a first end 192 and a second end 194, as well as an outside surface 196 and an inside surface 218. The second connection portion 186 is configured to be fed through the second guide slot 158 of the base 144 and toggle the second clamp element 184 between the clamped and unclamped positions, as described herein. Further, the second connection portion 186 includes the fourth plurality of teeth 198 on the outside surface 196 for interaction with the second plurality of teeth 214 on the base 144, and a plurality of protrusions on the inside surface 218 for interaction with the cable 208. The second elongated arm 188 and the second gripping portion 190 may make it easier for a user to grab the second clamp element 184 and/or move the second clamp element 168 within the base 144, as will be described in more detail herein.

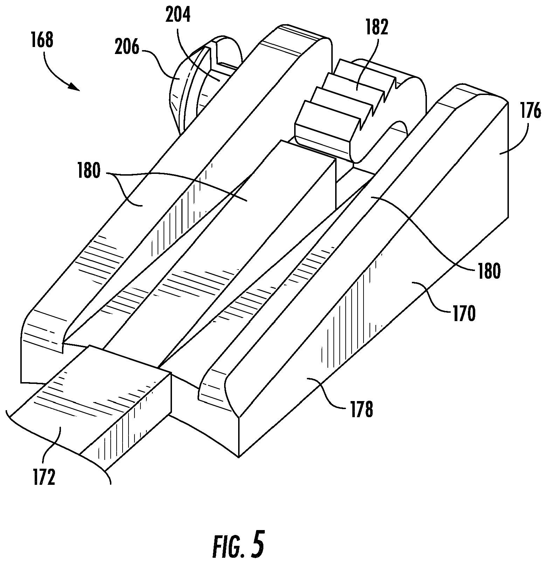

FIG. 5 is a perspective view of an outer portion of the first clamp element 168 in which the outside surface 180 of the first connection portion 170 and the first extension arm 172 are shown. The outside surface 180 includes the third plurality of teeth 182 of the first clamp element 168, which may be configured to interact with the first plurality of teeth 212 on the base 144. In some embodiments, the third plurality of teeth 182 may be closer to the first end 176 of the first connection portion 170 than the second end 178 of the first connection portion 170, but in other embodiments, the third plurality of teeth 182 may be positioned in any other way. Additionally, the first connection portion 170 of the first clamp element 168 may include a first pin 204 with a first blocking mechanism 206 on the end. The first pin 204 may be disposable within the first guide slot 156 of the base 144, and the first blocking mechanism 206 may be placed onto the first pin 204 such that the first pin 204 remains within the first guide slot 156 of the base 144.

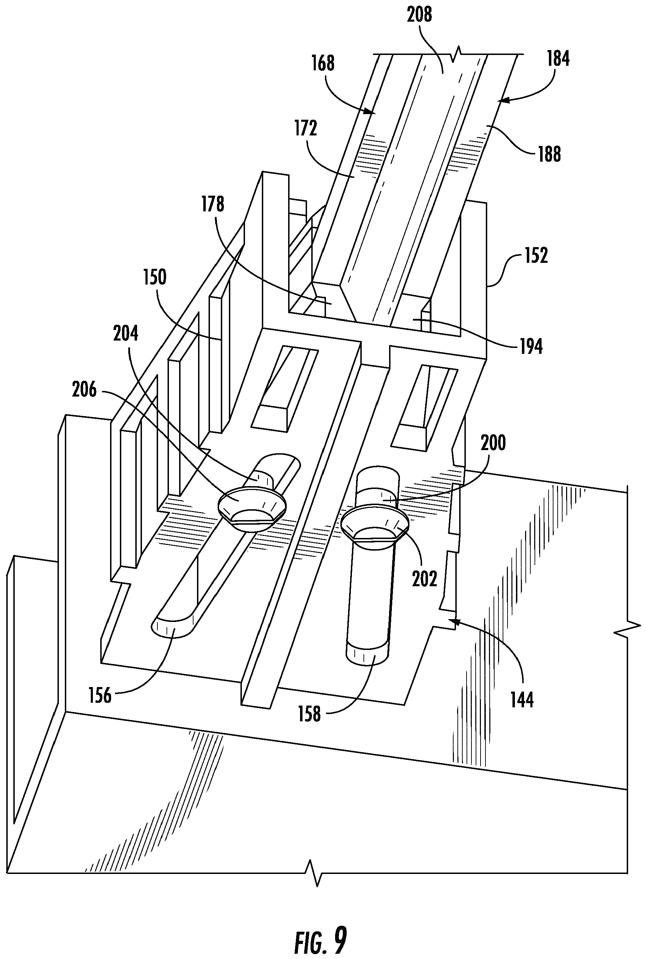

It should be appreciated that the outside surface 196 of the second clamp element 184 may be similar to the outside surface 180 of the first clamp element 168 that is shown in FIG. 5 (e.g., the outside surface 196 of the second clamp element 184 may mirror the outside surface 180 of the first clamp element 168). Further, the second connection portion 186 of the second clamp element 184 may include a second pin 200 with a second blocking mechanism 202 on the end (shown in FIG. 9).

The first pin 204 of the first clamp element 168 and the second pin 200 of the second clamp element 184 may be movable within the first guide slot 156 and the second guide slot 158 of the base 144, respectively, between the unclamped position and the clamped position. The first blocking mechanism 206 and the second blocking mechanism 202 may act to maintain the first clamp element 168 and the second clamp element 184 within the interior volume 224 of the base 144 by preventing the first pin 204 and the second pin 200 from being removable from the first guide slot 156 and the second guide slot 158, respectively.

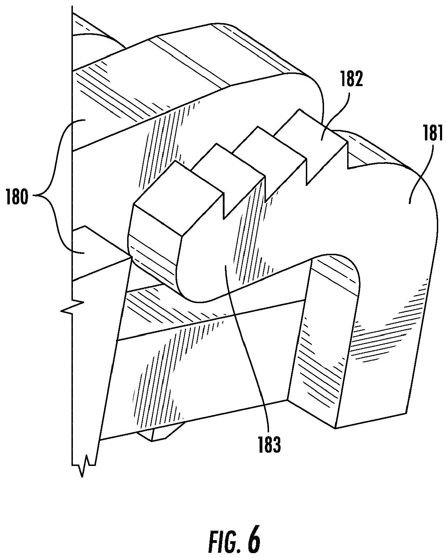

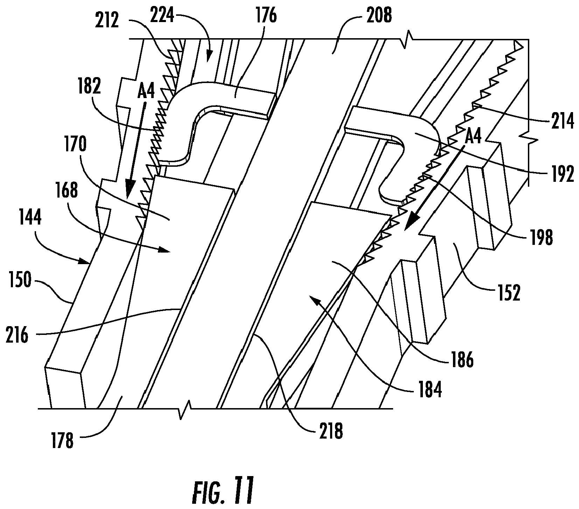

FIG. 6 shows the outside surface 180 of the first clamp element 168, which includes the third plurality of teeth 182 disposed along the outside surface 180 of the first clamp element 168. In the embodiment shown, the third plurality of teeth 182 are supported by a bend 181 and cantilever 183 that, e.g., permit flexibility of the third plurality of teeth 182, but in other embodiments, the third plurality of teeth 182 may be supported in any other way. As will be shown and described with respect to FIG. 11, the third plurality of teeth 182 are configured to interact with the first plurality of teeth 212 such that the first clamp element 168 locks with respect to the base 144 when the first clamp element 168 achieves a desired tension with respect to the cable 208 (e.g., at a clamped position).

Similarly, the outside surface 196 of the second clamp element 184 includes the fourth plurality of teeth 198 disposed along the outside surface 196 of the second clamp element 184. Although not shown, the fourth plurality of teeth 198 may be supported by a bend and cantilever such as the bend 181 and cantilever 183, or the fourth plurality of teeth 198 may be supported in any other way. As shown in FIG. 11, the fourth plurality of teeth 198 of the second clamp element 184 are configured to interact with the second plurality of teeth 214 of the base 144 such that the second clamp element 184 locks with respect to the base 144 when the second clamp element 184 achieves a desired tension with respect to the cable 208 (e.g., at a clamped position).

FIG. 7 is a perspective view of the inside side of the first connection portion 170 and the first extension arm 172 of the first clamp element 168. As shown, the first clamp element 168 includes a plurality of protrusions 210 disposed on an inner surface 216 of the first clamp element 168. The plurality of protrusions 210 may be configured to interact with the cable 208 when the cable is secured within the interior volume 224 of the base 144 to prevent the cable 208 from moving. In the embodiment shown in FIG. 7, the plurality of protrusions 210 include eight protrusions. However, in other embodiments, the inner surface 216 may include more or less protrusions (e.g., only one protrusion), or in some other embodiments, the inner surface 216 may not include any protrusions at all. For example, the first clamp element 168 may be manufactured using a material having high friction, and protrusions may therefore be unnecessary to prevent the cable from moving. Additionally, it should be appreciated that the inner surface 218 of the second clamp element 184 may be similar to the inner surface 216 of the first clamp element 168 that is shown in FIG. 7 (e.g., the inner surface 218 may mirror the inner surface 216).

Further, it should be appreciated that the plurality of protrusions 210 on the inner surface 216 of the first clamp element 168, along with a plurality of protrusions on the inner surface 218 of the second clamp element 184, may be configured such that any type of cable can be secured therebetween. That is, although the cable 208 is a cylindrical cable, other cables such as flat or differently-shaped cables are also securable with the interior volume 224 of the base 144.

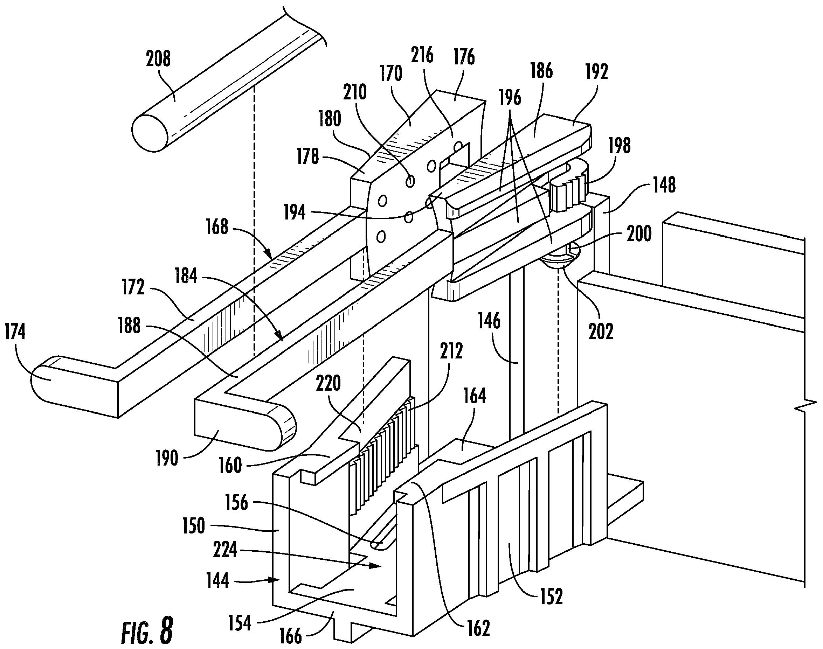

FIG. 8 is an exploded view of the first clamp element 168, the second clamp element 184, the base 144 connected to the outer cable through portion 146 and the inner cable through portion 148, and a cable 208. As shown, the cable 208 can be placed between the first clamp element 168 and the second clamp element 184 to form an assembly, and then the assembly can be inserted into the interior volume 224. Alternatively, the first clamp element 168 and the second clamp element 184 can be placed into the interior volume 224 first (e.g., pre-installed, as will be described herein), and then the cable 208 can be placed within the interior volume 224 between the first clamp element 168 and the second clamp element 184 when the first clamp element 168 and the second clamp element 184 are in the unclamped position.

FIG. 9 is a bottom perspective view of the components shown in FIG. 8 after having been assembled. Further, FIG. 9 shows how the first pin 204 and the second pin 200 may slide within the first guide slot 156 and the second guide slot 158, respectively. The first blocking mechanism 206 keeps the first pin 204 within the first guide slot 156 and thus causes the first clamp element 168 to stay at least partially within the interior volume 224 of the base 144 even before the first clamp element 168 has moved into the clamped position. Similarly, the second blocking mechanism 202 keeps the second pin 200 within the second guide slot 158 and thus causes the second clamp element 184 to stay at least partially within the interior volume 224 of the base 144 even before the second clamp element 184 has moved into the clamped position. It should be appreciated that, in some embodiments, the first clamp element 168 and the second clamp element 184 may be able to move within the interior volume 224 of the base 144 to secure the cable 208 without one or more of the first pin 204, the second pin 200, the first blocking mechanism 206, the second blocking mechanism 202, the first guide slot 156, or the second guide slot 158. Further, additional elements may be present in other embodiments to guide the first clamp element 168 and/or the second clamp element 184, or in other embodiments, there may be no guiding elements.

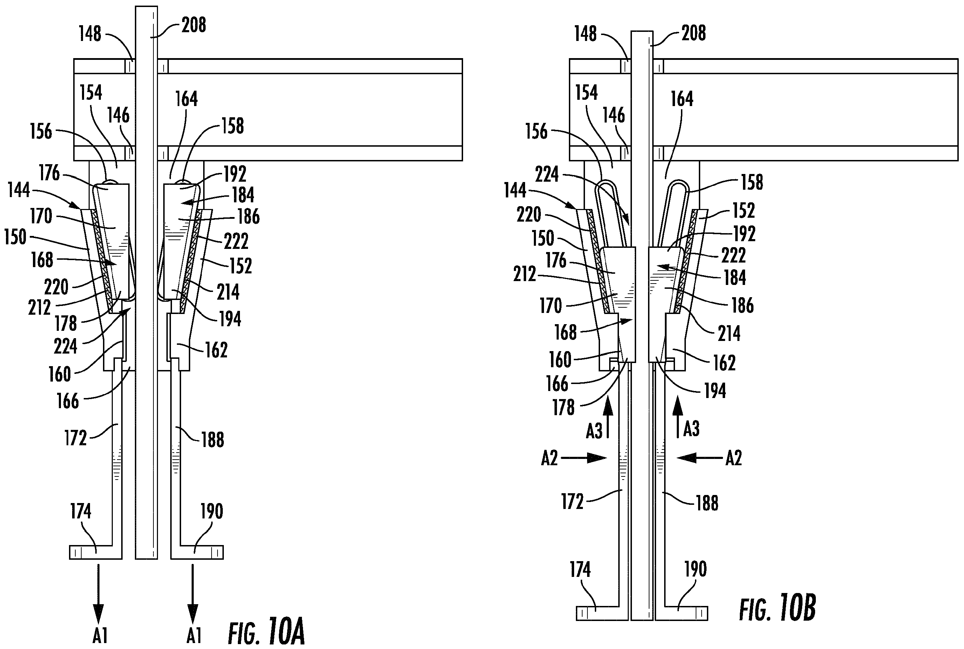

FIGs. 10A-10B show how the first clamp element 168 and the second clamp element 184 can be disposed within the interior volume 224 of the base 144 and can transition between an unclamped position and a clamped position with a cable such as the cable 208 disposed therebetween. As shown in FIG. 10A, the first clamp element 168 and the second clamp element 184 are inserted into the interior volume 224 of the base 144. In the embodiment shown, the first connection portion 170 of the first clamp element 168 and the second connection portion 186 of the second clamp element 184 are positioned within the interior volume 224 of the base 144, and the first elongated arm 172 of the first clamp element 168 and the second elongated arm 188 of the second clamp element 184 extend out from the interior volume 224 of the base 144.

In some embodiments, the first clamp element 168 and the second clamp element 184 may be pre-installed into the base 144. During the pre-installation process, the first blocking mechanism 206 of the first clamp element 168 may be removed from the first pin 204, and the first clamp element 168 may be configured to pass into the interior volume 224 by positioning the first end 176 of the first clamp element 168 proximate to the first end 164 of the base 144 and allowing the first elongated arm 172 of the first clamp element 168 to pass between the first flange 160 of the first wall 150 and the second flange 162 of the second wall 152. The first clamp element 168 can then be pushed outward into the unclamped position. The first clamp element 168 may then be secured, e.g., by re-connecting the first blocking mechanism 206 to the first pin 204 that extends downwardly from the first connection portion 170 of the first clamp element 168 (as shown in FIG. 9). The first guide slot 156 may thus contain the first pin 206, with the first blocking mechanism 204 on the bottom and a bottom surface of the first connection portion 170 of the first clamp element 168 on the top.

Similarly, the second blocking mechanism 202 of the second clamp element 184 may be removed from the second pin 200, and the second clamp element 184 may be configured to pass into the interior volume 224 by positioning the first end 192 of the second clamp element 184 proximate to the first end 164 of the base 144 and allowing the second elongated arm 188 of the second clamp element 184 to pass between the first flange 160 of the first wall 150 and the second flange 162 of the second wall 152. The second clamp element 184 can then be pushed outward into the unclamped position. The second clamp element 184 may then be secured, e.g., by re-connecting a second blocking mechanism 202 to a second pin 200 that extends downwardly from the second connection portion 186 of the second clamp element 184 (as best shown in FIG. 9). The second guide slot 158 may thus contain the second pin 200, with the second blocking mechanism 202 on the bottom and a bottom surface of the second connection portion 186 of the second clamp element 184 on the top.

Once the first clamp element 168 and the second clamp element 184 are in the unclamped position and the first blocking mechanism 206 and the second blocking mechanism 202 are re-connected, the pre-installation process may be over.

In the unclamped position, as shown in FIG. 10A, the first clamp element 168 is proximate to the first wall 150, and the first end 176 of the first connection portion 170 is proximate to the first end 164 of the base 144. Further, in the unclamped position, the second clamp element 184 is proximate to the second wall 152, and the first end 192 of the second connection portion 186 is proximate to the first end 164 of the base 144. In the unclamped position, the first clamp element 168 and the second clamp element 184 are positioned to receive the cable 208 therebetween in an unsealed configuration.

FIG. 10B shows the first clamp element 168 and the second clamp element 184 after having been moved from the unclamped position to the clamped position with the cable 208 positioned therebetween. The first clamp element 168 and the second clamp element 184 are repositioned within the base 144 from the unclamped position to the clamped position by moving (e.g., pulling with the user's finger(s)) the first elongated arm 172 of the first clamp element 168 and the second elongated arm 188 of the second clamp element 184 along a direction shown by the arrows A1 in FIG. 10A (i.e., in a direction away from the enclosure 100 or away from the base 144). In other words, the first clamp element 168 and the second clamp element 184 are repositioned within the base 144 from the unclamped position to the clamped position by moving the first gripping portion 174 of the first clamp element 168 and the second gripping portion 190 of the second clamp element 184 along the direction shown by the arrows A1 (i.e., in a direction away from the enclosure 100 or away from the base 144). For example, in some embodiments, the user may use his or her finger(s) to pull the first gripping portion 174 of the first clamp element 168 and the second gripping portion 190 of the second clamp element 184 along direction A to move the clamp elements 168, 184 into the clamped position within base 144.

Still referring to FIGs. 10A-10B, the first flange 160 may be configured to retain the first clamp element 168 within the interior volume 224 when the first clamp element 168 is in the clamped position (i.e., where the first connection portion 170 is proximate to the first wall 150). Similarly, the second flange 162 may be configured to retain the second clamp element 184 within the interior volume 224 when the second clamp element 184 is in the clamped position (i.e., where the second connection portion 186 is proximate to the second wall 152). Stated another way, when the first clamp element 168 and the second clamp element 184 are in the unclamped position as shown in FIG. 10A, the first flange 160 retains the first elongated arm 172 of the first clamp element 168 within the interior volume 224, and the second flange 162 retains the second elongated arm 188 of the second clamp element 184 within the interior volume 224. And, when the first clamp element 168 and the second clamp element 184 are in the clamped position as shown in FIG. 10B, the first flange 160 retains the first connection portion 170 of the first clamp element 168 within the interior volume 224, and the second flange 162 retains the second connection portion 186 of the second clamp element 184 within the interior volume 224. The retention provided by the first flange 160 and the second flange 162 from the first clamp element 168 and the second clamp element 184 is in addition to the retention provided by the first pin 204 and the second pin 200 within the first guide slot 156 and the second guide slot 158, respectively, which are secured by the first blocking mechanism 206 and the second blocking mechanism 202, respectively, as described herein.

After the first clamp element 168 and the second clamp element 184 have been repositioned to the clamped position with the cable 208 secured therebetween, as shown by FIG. 10B, in some embodiments, the first clamp element 168 and the second clamp element 184 can be repositioned back to the unclamped position to adjust and/or remove the cable 208. For example, as shown by the arrows A2 and A3 in FIG. 10B, the first clamp element 168 and the second clamp element 184 are repositionable from the clamped position to the unclamped position by pinching the first clamp element 168 at a location along a length of the first clamp element 168 that is adjacent to the base 144, pinching the second clamp element 184 at a location along a length of the second clamp element 184 that is adjacent to the base 144, and then pushing the first clamp element 168 and the second clamp element 184 in a direction that is toward the outer cable through portion 146 and the inner cable through portion 148 (which may lead into an enclosure) while the first clamp element 168 and the second clamp element 184 are being pinched. Although the arrows A2 and A3 in FIG. 10B demonstrate pinching the first clamp element 168 and the second clamp element 184 at a location along the lengths of the first clamp element 168 and the second clamp element 184 that are adjacent to the base 144, the first clamp element 168 and the second clamp element 184 may be repositioned from the clamped position to the unclamped position by pinching the first clamp element 168 and the second clamp element 184 at any other location along the lengths of the first clamp element 168 and the second clamp element 184.

Referring now to FIG. 11, because the first wall 150 comprises the first plurality of teeth 212 that are angled relative to the longitudinal axis A_{L1} of the base 144, and because the third plurality of teeth 182 may be angled and/or moveable with respect to the first connection portion 170, the third plurality of teeth 182 are able to slide along the first plurality of teeth 212 as the first clamp element 168 is pulled away from the base 144 until a desired tension is achieved. Similarly, because the second wall 152 comprises the second plurality of teeth 214 that are angled relative to the longitudinal axis A_{L1} of the base 144, and because the fourth plurality of teeth 198 may be angled and/or moveable with respect to the second connection portion 186, the fourth plurality of teeth 198 are able to slide along the second plurality of teeth 214 as the second clamp element 184 is pulled away from the base 144 until a certain tension is achieved. That is, once the first clamp element 168 and the second clamp element 184, with the cable 208 therebetween, have moved far enough away within the base 144 in a direction that is away from the enclosure, the third plurality of teeth 182 may be no longer able to slide along the first plurality of teeth 212, and the fourth plurality of teeth 198 may be no longer able to slide along the second plurality of teeth 214 because of the decreasing cross-sectional width of the interior volume 224 of the base 144. Further, because of the angled nature of the teeth, there is a one-way directionality of the teeth illustrated in FIG. 11 by arrows A4. That is, the third plurality of teeth 182 are not able to move in an opposite direction with respect to the first plurality of teeth 212, and the fourth plurality of teeth 198 are not able to move in an opposite direction with respect to the second plurality of teeth 214, further causing the teeth to lock in place via frictional engagement at the desired tension. That is, once the cross-sectional width of the interior volume 224 at the point in which the teeth are interacting has become small enough to secure the cable 208, the first clamp element 168 and the second clamp element 184 become locked within the base 144, via frictional engagement of the teeth, with the cable 208 therebetween at the desired tension. The desired tension may be a function of one or more of the heights of the teeth, the material used to form the first clamp element 168, second clamp element 184, and base 144, among other factors.

In some embodiments, the first clamp element 168 and the second clamp element 184 may be comprised of a first material, and the base 144 may be comprised of a different second material. Further, in some embodiments, the first clamp element 168, the second clamp element 184, and the base 144, may each be comprised of different materials. The first material may be more rigid than the second material such that the first clamp element 168 and/or the second clamp element 184 would break before the base 144 if an external damaging force were applied (because it may be easier and more desirable to have to replace the first clamp element 168 and/or second clamp element 184 than to have to replace the base 144). Indeed, in many embodiments, the first clamp element 168 and the second clamp element 184 may be designed to be reusable and/or easily replaceable.

### Example Flowchart(s)

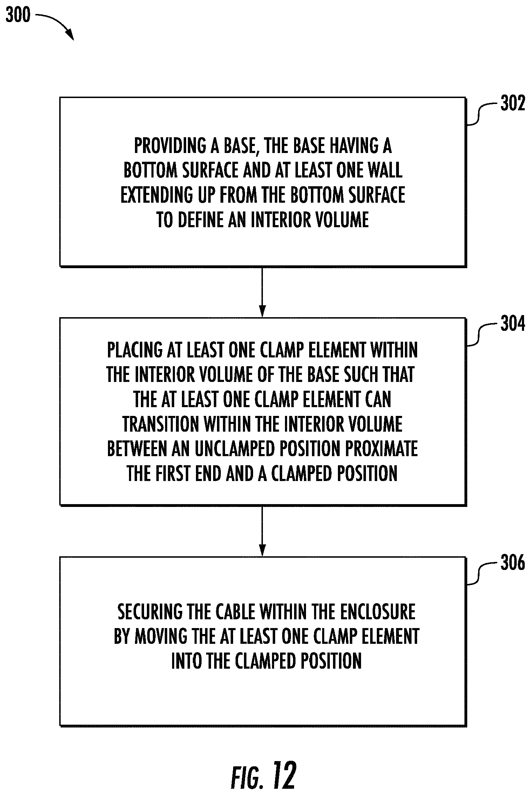

Embodiments of the present disclosure provide various methods for securing a cable within an enclosure, such as described herein. Various examples of the operations performed in accordance with some embodiments of the present disclosure will now be provided with reference to FIG. 12.

FIG. 12 illustrates a flowchart according to an example method 300 of securing a cable within an enclosure according to an example embodiment. The method 300 may include providing a base, the base having a bottom surface and at least one wall extending up from the bottom surface to define an interior volume at operation 302. For example, the base may have a first end and a second end, and the first end may be positioned more proximate to a cable entrance into the enclosure than the second end. Further, the at least one wall may be angled from the first end to the second end such that a cross-sectional width of the interior volume of the base decreases from the first end to the second end. At operation 304, the method comprises placing at least one clamp element within the interior volume of the base such that the at least one clamp element can transition within the interior volume between an unclamped position proximate the first end and a clamped position, as described herein. The clamped position may be closer to the second end of the base than the unclamped position. At operation 306, the method comprises securing the cable within the enclosure by moving the at least one clamp element into the clamped position. Additional manufacturing operations and/or additional usage operations are also contemplated.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A system for securing a cable within an enclosure, the system comprising:
a base, the base having a bottom surface and at least one wall extending up from the bottom surface to define an interior volume,
wherein the base has a first end and a second end, the first end being positioned more proximate to a cable entrance into the enclosure than the second end, and
wherein the at least one wall is angled from the first end to the second end such that a cross-sectional width of the interior volume of the base decreases from the first end to the second end; and
a first clamp element disposable within the interior volume of the base, the first clamp element being configured to transition within the interior volume between an unclamped position proximate the first end and a clamped position, wherein in the clamped position, the first clamp element is closer to the second end than the unclamped position and wherein, when the first clamp element is in the clamped position, the cable is secured within the interior volume of the base.

2. The system of claim 1, wherein the system further comprises a second clamp element disposable within the interior volume of the base, the second clamp element being configured to transition within the interior volume between a second unclamped position proximate the first end and a second clamped position, wherein in the second clamped position, the second clamp element is closer to the second end than the second unclamped position.

3. The system of claim 2, wherein, when the first clamp element is in the clamped position and the second clamp element is in the second clamped position, the cable is secured within the interior volume of the base.

4. The system of claim 3, wherein the first clamp element comprises a first elongated arm that extends outwardly from the base when the first clamp element is disposed within the interior volume of the base, wherein the second clamp element comprises a second elongated arm that extends outwardly from the base when the second clamp element is disposed within the interior volume of the base, and wherein the first clamp element is repositionable within the base from the unclamped position to the clamped position, and the second clamp element is repositionable within the base from the second unclamped position to the second clamped position, when the first elongated arm of the first clamp element and the second elongated arm of the second clamp element are pulled in a direction that is away from the enclosure.

5. The system of any one of claims 1-4, wherein the first clamp element comprises a pin that is movable within a guide slot of the base between the unclamped position and the clamped position.

6. The system of claim 5, wherein the pin comprises a blocking mechanism that maintains the first clamp element within the interior volume of the base.

7. The system of any one of claims 1-4, wherein the base has a first plurality of teeth disposed along an inside surface of the at least one wall.

8. The system of claim 7, wherein the first clamp element has a second plurality of teeth disposed along a surface of an interior side of the first clamp element, and wherein the first plurality of teeth are configured to interact with the second plurality of teeth such that the first clamp element locks with respect to the base when the first clamp element is in the clamped position.

9. The system of any one of claims 1-4, wherein the first clamp element is repositionable from the clamped position to the unclamped position by pinching the first clamp element in an inward direction and then pushing the first clamp element in a direction that is toward the enclosure.

10. The system of claim 9, wherein the first clamp element is repositionable from the clamped position to the unclamped position by pinching the first clamp element at a location along a length of the first clamp element that is adjacent to the base.

11. The system of any one of claims 1-4, wherein the cross-sectional width of the base decreases from the first end to the second end at a ratio that corresponds to a diameter of the cable.

12. The system of claim 11, wherein the ratio is 2 to 1.

13. The system of claim 11, wherein a length of the base is selected such that the cable with a desired diameter is securable within the base at a desired tension.

14. The system of any one of claims 1-4, wherein the first clamp element comprises at least one protrusion disposed on an inner surface of the first clamp element, and wherein the at least one protrusion is configured to interact with the cable when the cable is secured within the interior volume of the base to prevent the cable from moving.

15. The system of any one of claims 1-4, wherein the first clamp element is comprised of a first material, wherein the base is comprised of a second material, and wherein the first material is more rigid than the second material.
